# EUROPEAN PATENT SPECIFICATION

(11) **EP 2 296 242 B1**
(45) Date of publication and mention of the grant of the patent: **12.08.2015**
(21) Application number: 10175542.9
(22) Date of filing: 07.09.2010
(51) Int. Cl.: H02G 3/12

(54) **Pouring work box including attachment pin**
Gießarbeitskasten mit Befestigungsvorrichtung
Coulage de boîte d'ouvrage incluant une broche de fixation

(30) Priority: 11.09.2009 NL 2003476
(43) Date of publication of application: 16.03.2011
(73) Proprietor: ABB B.V., 6716 AA Ede (NL)
(72) Inventor: De Jong, Harold Hermanus Albertus Marie, 3521 TD, Utrecht (NL)
(74) Representative: Geurts, Franciscus Antonius

(56) References cited:
- WO-A1-2007/061316
- DE-U1- 20 219 422
- JP-A- 10 201 056
- JP-A- 2000 324 651
- NL-C2- 1 025 856
- SE-L- 7 812 809

## Description

### BACKGROUND OF THE INVENTION

The invention relates to a pouring work box.

Pouring work boxes are used in pouring work, wherein wall sections and ceiling sections are formed by means of pouring concrete between shuttering walls. Prior to pouring concrete the pouring work boxes and the pipes that connect the boxes to one another are arranged between the shuttering walls. The pouring work boxes are then temporarily secured against the shuttering walls, with the installation edge facing the shuttering wall so that after removal of the shuttering walls the switch material can be secured on the installation edge.

NL1025856 discloses a pouring work box which comprises two attachment pins projecting from the installation edge of the pouring work box. An electrician has to drill two holes in the shuttering wall at the same intermediate distance as the attachment pins in order to be able to insert them therein. This inevitably requires a hole drill template. The diameter of the holes needs to be accurately adapted to the diameter of the attachment pins, on the one hand for making the simultaneous insertion of the attachment pins possible and on the other hand for ensuring sufficient clamping force so that the pouring work box also remains in its place during pouring concrete.

JP 200324651 discloses a pouring work box according to the preamble of claim 5 and a method for accommodating a plastic work box in a wall. JP 200324651 discloses a box which comprises a cover with a central opening in which a baseplate is enclosed. The baseplate is connected to the cover via a thin part so that separation is possible. This separation is effected when a shuttering wall is removed. JP 200324651 further discloses a method step in which the baseplate is mounted to the shuttering wall by means of a nail.

It is an object of the invention to provide a pouring work box that can easily be secured on a shuttering wall.

It is an object of the invention to provide a pouring work box that can reliably be secured on a shuttering wall.

### SUMMARY OF THE INVENTION

According to one aspect the invention provides a method for accommodating a pouring work box in a wall or floor for building up electric wiring according to claim 1.

The external attachment pin projects from the centre part of the lid, and thus forms a central attachment pin for the pouring work box. The attachment pin forms a symmetrical indication for the future position of the switch material after the shuttering wall has been removed. Within the method according to the invention it will therefore suffice to drill only one attachment hole in the shuttering wall in the centre of the position of the future switch material, after which the pouring work box is secured by exerting the pressure force on the as yet freely accessible housing. After securing the pouring work box concrete can be poured around the pouring work box.

In one embodiment the pressure force is exerted on the bottom wall of the housing. The bottom wall faces away from the shuttering wall and as a result is well able to absorb the pressure force that is typically oriented towards the shuttering wall.

In one embodiment the pressure force is exerted by means of a striking or impact tool, preferably a hammer, so that the attachment pin can be introduced firmly in the attachment hole in successive blows.

In one embodiment the pressure force or successive pressure forces are exerted on the housing until the lid around the attachment pin abuts the shuttering wall.

According to a further aspect the invention provides a pouring work box for building up electric wiring according to claim 5.

The external attachment pin projects from the centre part of the lid, and thus forms a central attachment pin for the pouring work box. The attachment pin forms a symmetrical indication for the future position of the switch material after the shuttering wall has been removed. It will therefore suffice to drill only one attachment hole in the shuttering wall in the centre of the position of the future switch material. This position can easily be determined without additional aids.

The support forms a means for directly transferring impact forces from the bottom wall to the attachment pin. In that way the electrician is able to firmly anchor the attachment pin in the attachment hole by hitting onto the bottom wall from the outside.

In one embodiment that is currently not specified in the claims, the attachment pin is connected to the lid, so that the pouring work box can be provided with the attachment pin by providing it with this lid. The other parts of the pouring work box can thus remain standard parts.

In a simple embodiment the attachment pin is integrally formed with the lid.

In one embodiment the installation edge defines a straight mounting surface, wherein the attachment pin is oriented transverse to the straight mounting surface. Alternatively formulated the attachment pin extends along the centre line of the circumferential wall. In that way it will suffice to drill an attachment hole transverse to the shuttering wall, which is relatively easy for the electrician.

In one embodiment the support stands detached on the bottom wall, so that the pouring work box can be provided with the attachment pin and the support by providing it with this lid.

In one embodiment the support is connected to the bottom wall, wherein the connection with the bottom wall preferably is detachable, preferably by means of a snap connection, which provides the support great rigidity for being able to pass impact forces through to the attachment pin.

In one simple embodiment the support is integrally formed with the lid.

In one embodiment that is currently not specified in the claims, the support has a cross-shaped cross-section transverse to its longitudinal direction, which offers the support great bending stiffness to be able to pass impact forces through to the attachment pin.

In one embodiment that is currently not specified in the claims, the pouring work box comprises a spout projecting from the circumferential wall for accommodation of a pipe and passing through cabling to the installation cavity, wherein the centre line of the attachment pin and the centre line of the spout substantially intersect each other. The advantage thereof is that the pouring work box is thus able to absorb slight pressure forces that are inadvertently exerted on the pipe during the installation thereof without starting to rotate around the attachment pin.

In one embodiment the installation edge forms a part of an installation ring attached at the inside of the circumferential wall, which ring may be a separate part.

In one embodiment the installation ring can be rotated with respect to the circumferential wall, so that the switch material can be mounted in the desired orientation with respect to the poured wall section even when the pouring work box has acquired a deviating rotation position in the wall.

In one embodiment that is currently not specified in the claims, the installation ring is confined in a circumferential groove in the circumferential wall.

In one embodiment the lid is attached on the installation ring, so that the lid is able to protect the installation ring all round against hardening concrete.

In one embodiment thereof that is currently not specified in the claims, the lid is provided with attachment members that detachably engage onto the installation ring, so that the lid can be secured onto the installation ring, for instance by snapping, and after hardening of the concrete can be removed together with the shuttering wall in order to obtain a mountingready, freely accessible installation edge.

In one embodiment the installation edge forms part of the lid, wherein the lid is provided with a predetermined break connection extending all round the centre part for separating the installation edge from the centre part by means of breaking the predetermined break connection. The centre part and thus the attachment pin can be removed by breaking the predetermined break connection. This can for instance take place by taking away the shuttering wall.

The centre part can be removed by breaking the predetermined break connection, after which the installation opening becomes accessible for the connection of the switch material and building it up on the formed installation edge.

In one embodiment that is currently not specified in the claims, the installation edge is part of an installation ring attached at the inside of the circumferential wall, which installation ring is left behind after breaking the predetermined break connection.

In one embodiment that is currently not specified in the claims, the installation ring can be rotated with respect to the circumferential wall, so that the switch material can be mounted in the desired orientation with respect to the box even when the box has acquired a deviating rotation position in for instance a wall.

In one embodiment that is currently not specified in the claims, the installation ring is confined in a circumferential groove in the circumferential wall.

In an embodiment that is currently not specified in the claims, the centre part can easily be removed by being smashed, particularly by breaking the predetermined break connection, when the lid is made of a rigid breakable synthetic material, preferably acrylonitril butadiene styrene or polystyrene.

### SHORT DESCRIPTION OF THE DRAWINGS

The invention will be elucidated on the basis of a number of exemplary embodiments shown in the attached drawings, in which:
Figure 1 shows an isometric side view of a pouring work box with lid according to a first embodiment of the invention;
Figure 2 shows the pouring work box according to figure 1, of which the lid has been removed;
Figure 3 shows an exploded view of the pouring work box according to figure 1;
Figures 4 and 5 show a side view and a cross-section of the pouring work box according to figure 1;
Figure 6 shows a top view of the pouring work box according to figure 1;
Figure 7 shows an exploded view of a pouring work box with lid according to a second embodiment of the invention;
Figure 8 shows an isometric view of the pouring work box according to figure 7, after removal of a part of the lid; and
Figures 9, 10 and 11 show consecutive steps for accommodating the pouring work box according to figures 1-6 in a wall that is made according to the pouring work method.

### DETAILED DESCRIPTION OF THE DRAWINGS

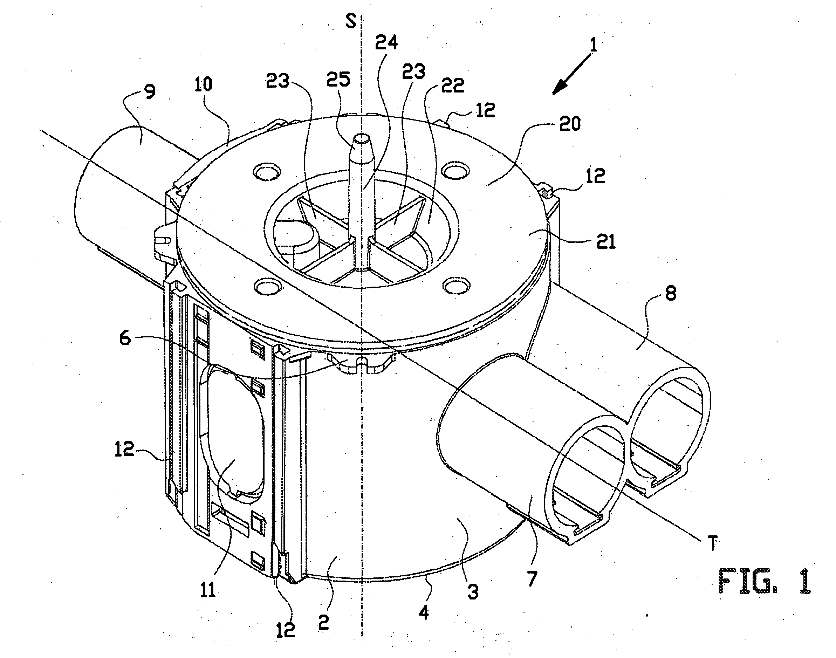

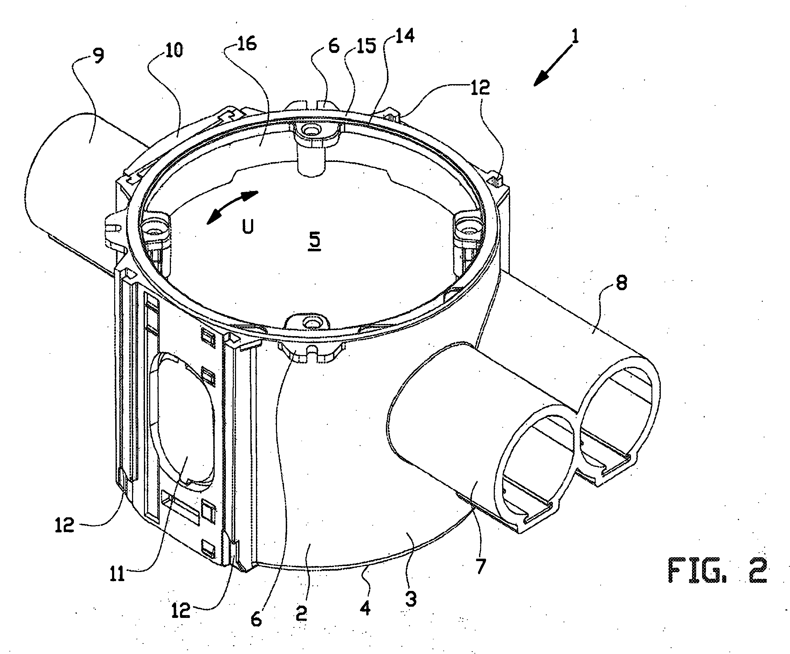

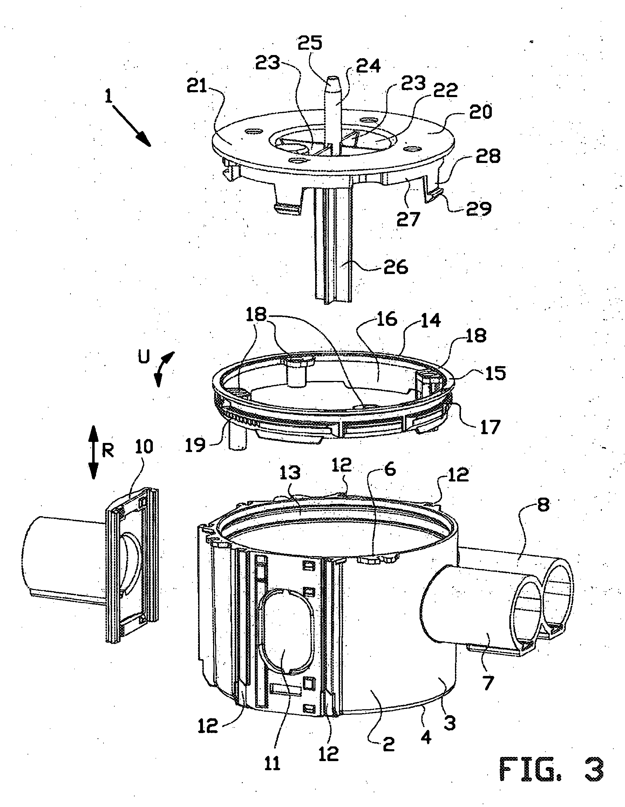

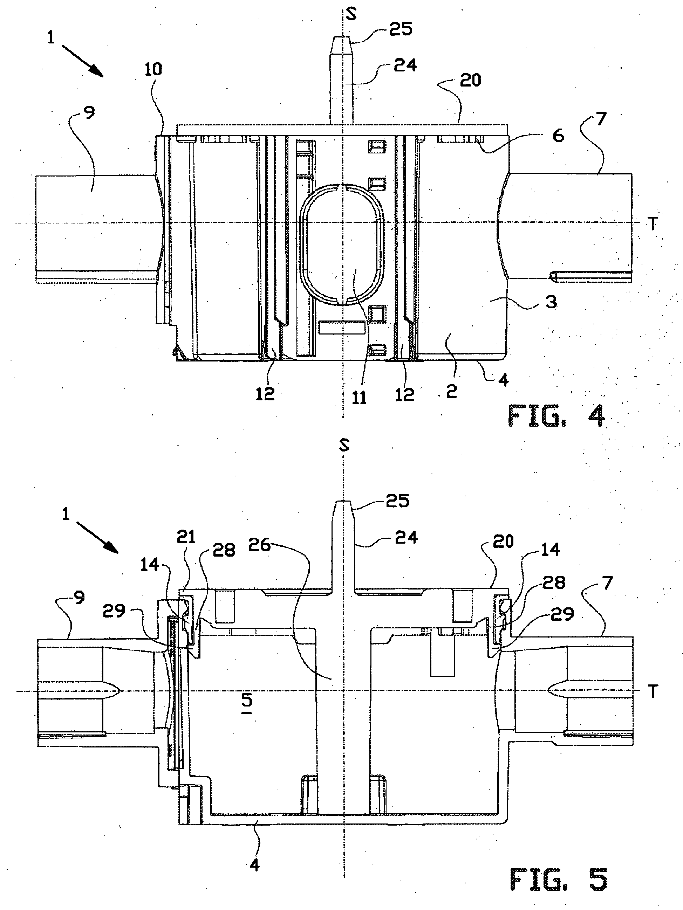

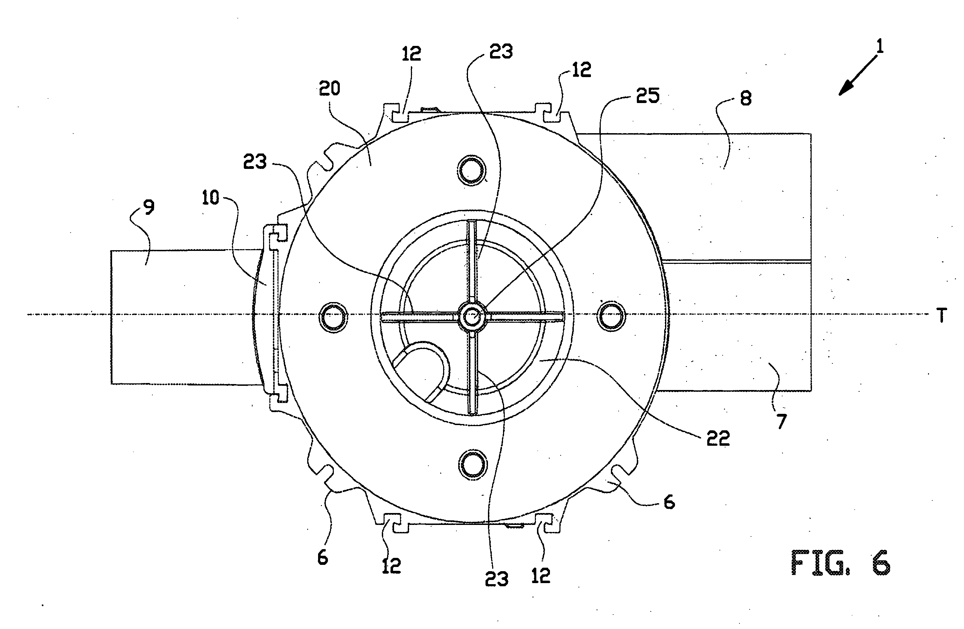

Figures 1-6 show a pouring work box 1 according to a first embodiment of the invention. The pouring work box 1 comprises a synthetic housing 2 that is built up having a bottom wall 4 and a circumferential wall 3 going round a centre line S, which walls bound an installation cavity 5. At the outside facing away from the bottom wall 4, the housing 2 is provided with two attachment lips 6 projecting from the circumferential wall for accommodation of an attachment wire with which the pouring work box 1 can be secured.

The housing 2 comprises a first spout 7 and a second spout 8 that are fixedly connected to the circumferential wall 3 for accommodation of a synthetic installation pipe (not shown) for passing through electric wiring to the installation cavity 5. The centre line T of the first spout 7 substantially intersects the centre line S of the circumferential wall 3. The circumferential wall 3 is furthermore provided with three openings 11 of which a number have been closed of with break-through shutters (not shown). The openings 11 and the first spout 8 are regularly spread along the circumference. Along the openings 11 insertion rails 12 are formed in the circumferential wall, in which rails in direction R an insert piece 10 having a third spout 9 can be slid for optionally providing the housing 2 with an extra spout.

The pouring work box 1 comprises a synthetic installation ring 14 that is secured in a circumferential groove 13 at the inside of the circumferential wall 3 that faces away from the bottom wall 4. The installation ring 14 comprises a circumferential installation edge 15 that is situated at the head edge 30 of the housing 2, a circumferential positioning wall 16 that is situated at the inside of the housing 2, and several locking edges 17 that are spread over the circumference, which locking edges extend radially from the positioning wall 16. The locking edges 17 extend in the circumferential groove 13 in order to keep the installation ring 14 in its place and they make a rotation of the ring in direction U about the centre line S possible. The rotation position of the installation ring 14 is locked by a cam (not shown) that engages onto a series of locking teeth 19. At the inside the installation ring 14 is provided with four threaded bushes 18 that are regularly spread all round, with which bushes switch material can be secured on the installation ring 14.

The pouring work box 1 comprises a lid 20 of a rigid, brittle breakable synthetic material, in this example acrylonitril butadiene styrene. The lid 20 comprises a straight cover plate 21 to which a circumferential abutment wall 27 has been integrally formed. The abutment wall 27 is provided with four attachment lips 28 having a barb 29 at their free outer end. In the placed condition of the lid 20 the cover plate 21 covers the installation edge 15, the abutment wall 27 abuts the inside of the installation ring 14 and the barbs 29 engage behind the installation ring 14.

The lid 20 is provided with a centre part 22 that is recessed with respect to the cover plate 21. In the centre part 22 cross-partitions 23 are formed of which the crossing is situated on the centre line S. From the crossing of the centre part 22 a straight, elongated locking pin or attachment pin 24 extends upwards which has a conical outer end 25 of which the centre line coincides with the centre line S of the housing 2. The conical outer end 25 is adapted for accommodation in an attachment hole having a drill diameter of approximately 4.8 mm that is common in this field. The attachment pin 24 has an increasing diameter in the direction of the lid 20, in order to fit clampingly in the attachment hole near the lid 20. At the opposite side the lid 20 is provided with an elongated support 26 extending from the centre part 22 and of which the centre line coincides with the centre line S of the housing 2. Transverse to the centre line S the support 26 has a cross-shaped cross-section that coincides with the cross-partitions 23. In the placed condition of the lid 20 the support 26 extends freely from the base of the attachment pin 24 through the installation cavity 5, up to the bottom wall 4. The support 26 stands detached or free on the bottom wall 4. The support 26 makes it possible to pass impact forces exerted from the outside of the housing 2 on the bottom wall 4 through to the attachment pin 24.

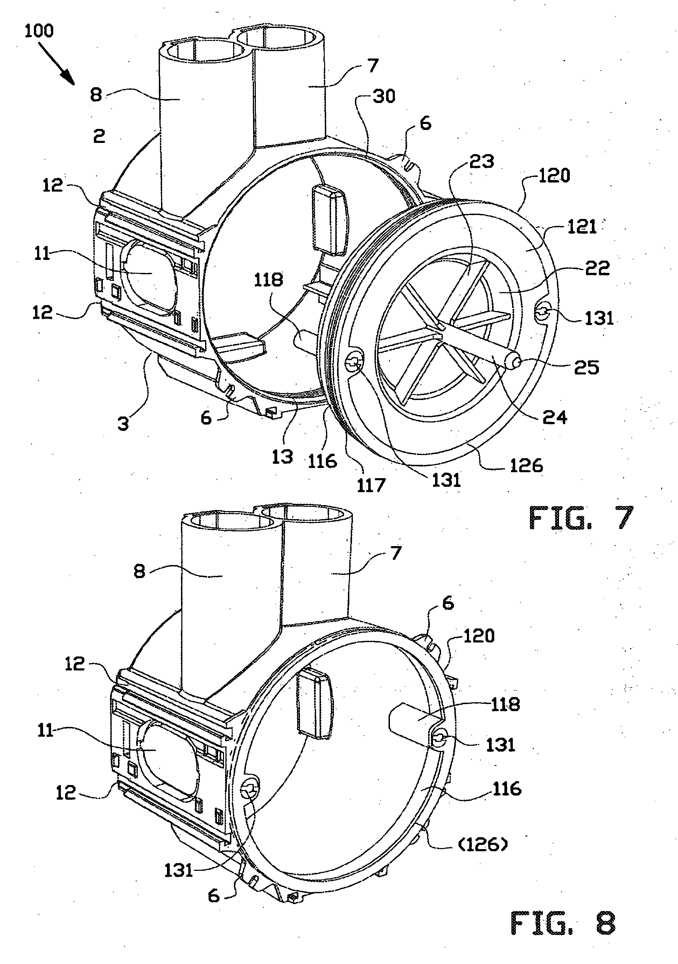

Figures 7 and 8 show a pouring work box 100 according to a second embodiment of the invention. The pouring work box 100 comprises the synthetic housing 2 as discussed above, an alternative synthetic lid 120 of a rigid, brittle breakable synthetic material, in this example polyethene. The lid 120 comprises a straight cover plate 121 to which a circumferential positioning wall 116 has been integrally formed, and several locking edges 117 that are spread over the circumference and extend radially from the positioning wall 116. In the placed condition of the lid 120 the cover plate 121 is situated on the head edge 30 and the locking edges 117 extend in the circumferential groove 13 of the housing 2.

The lid 120 is provided with two threaded bushes 118 that are partially accommodated in the positioning wall 116. An attachment screw 131 is placed in the threaded bushes. The lid 20 is provided with a centre part 22 that is recessed with respect to the cover plate 121, cross-partitions 23, attachment pins 24 and support 26 as discussed above. As shown in figure 7 the lid 120 is furthermore provided with a circumferential predetermined break weakening 126 formed in the cover plate 122, which weakening runs along the positioning wall 116. As shown in figure 8 only the predetermined break weakening 126 collapses by smashing in the lid 120 at the location of the centre part 122, as a result of which an installation ring 14 as described above remains.

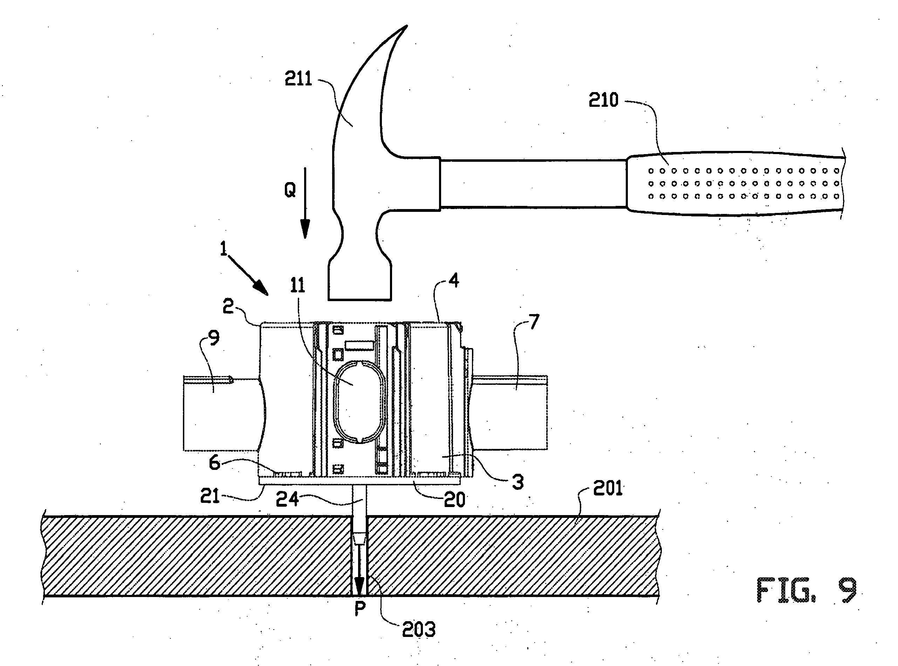

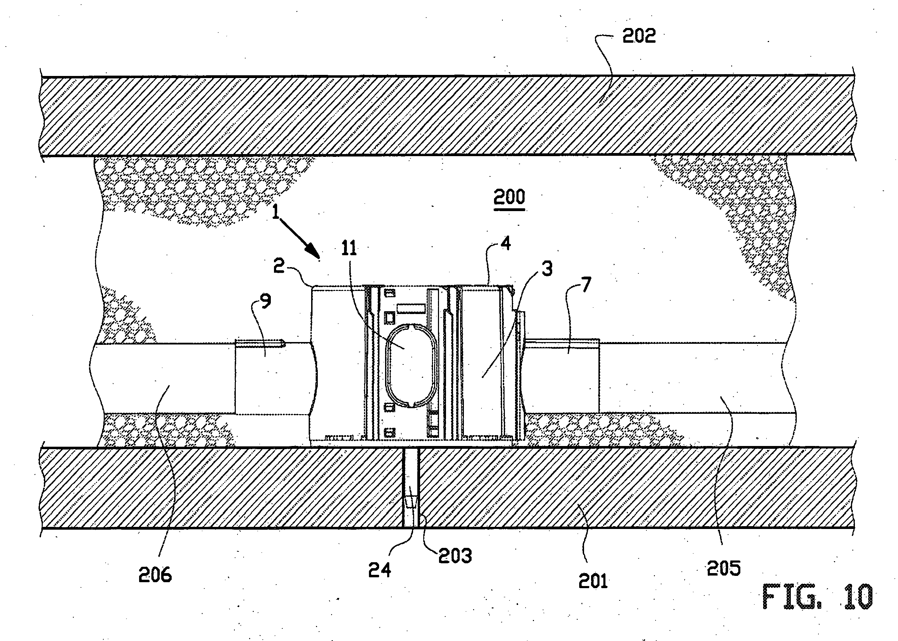

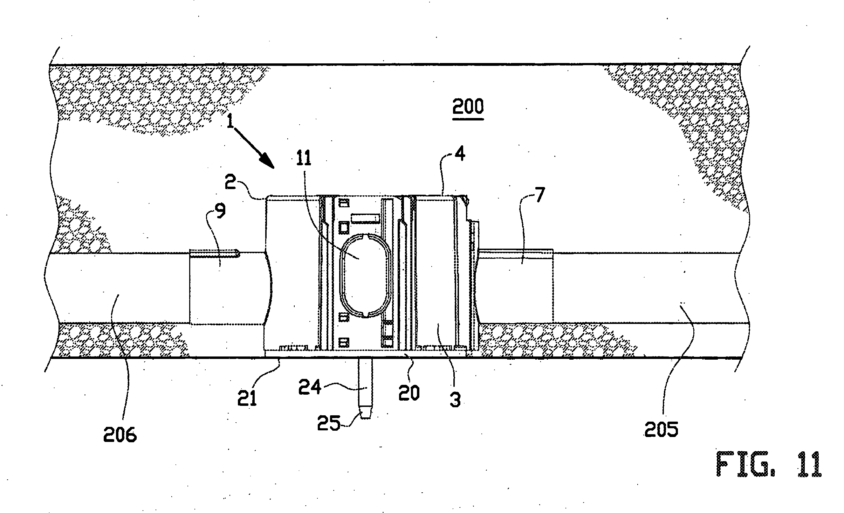

Figures 9, 10 and 11 show consecutive steps for forming a vertical, concrete wall 200 according to the pouring work method, in which pouring work boxes according to the invention have been accommodated. In these figures this is shown for one pouring work box 1 according to the first embodiment. When forming the wall 200 by means of the pouring work method a shuttering wall 201 is provided with an attachment hole 203 of 4.8 mm in the centre of the location where the mounting of switch material on the wall 200 to be formed is wanted. After that the pouring work box 1 is manually taken hold of at the housing 2 in order to at least partially insert the attachment pin 24 in direction P into the attachment hole 230 by exerting a pressure force Q on the housing 2 directed towards the shuttering wall 201. Subsequently further pressure forces Q are exerted on the housing 2 by hand or by a hand tool in the form of impact forces that are directed towards the shuttering wall 201. In this example this is effected by hitting the bottom wall 4 with the head 211 of a hammer 210. The externally exerted pressure forces Q are passed directly through to the attachment pin 24 via the support 26.

Exerting the pressure forces Q result in the cover plate 21 around the attachment pin 24 finally abutting the shuttering wall 201 flush. The clamping of the attachment pin 24 in the attachment hole 203 keeps the pouring work box 1 in its place, also when the shuttering plate 203 is erected. Subsequently some pipes 205, 206 may optionally be connected to the pouring work box 1. After placing the opposing shuttering wall 202 concrete is poured between the shuttering walls 201, 202. After the concrete has hardened the shuttering walls are removed so that the wall 200 is left. The lid 20 may be left behind on the housing 2 here. The lid 20 according to the first embodiment can be removed as a whole to make the installation ring 14 free. The lid 120 according to the second embodiment can be smashed in at the location of the centre part in order to form the installation ring 114.

## Claims

1. Method for accommodating a pouring work box (1; 100) in a wall (200) or floor for building up electric wiring, wherein the pouring work box comprises a housing (2) having a bottom wall (4) and a circumferential wall (3) that bound an installation cavity (5) which via an installation opening situated opposite the bottom wall is accessible for arranging electric connections, an installation edge (15) at the location of the installation opening for attachment of switch material on the pouring work box, a lid (20; 120) closing off the installation opening, and an external attachment pin (24) for securing the pouring work box in an attachment hole (203) in a shuttering wall (201), wherein the attachment pin is connected to the lid, wherein the attachment pin (24) projects from a centre part (22) of the lid situated in the middle of the installation opening, wherein the method comprises forming an attachment hole (203) by drilling in a shuttering wall (201) and placing the attachment pin (24) in the attachment hole (203) by exerting a pressure force (Q) on the housing (2) in the direction of the shuttering wall, which pressure force within the housing (2) is passed through to the attachment pin (24).

2. Method according to claim 1, wherein the pressure force (Q) is exerted on the bottom wall (4) of the housing (2).

3. Method according to claim 1 or 2, wherein the pressure force (Q) is exerted by means of an impact tool, preferably a hammer (210).

4. Method according to any one of the preceding claims, wherein the pressure force (Q) or successive pressure forces are exerted on the housing (2) until the lid (20) around the attachment pin (24) abuts the shuttering wall (201).

5. Pouring work box (1; 100) for building up electric wiring, comprising a housing (2) having a bottom wall (4) and a circumferential wall (3) that bound an installation cavity which via an installation opening situated opposite the bottom wall is accessible for arranging electric connections, an installation edge (15) at the location of the installation opening for attachment of switch material on the pouring work box, a lid (20; 120) closing off the installation opening, and an external attachment pin (24) for securing the pouring work box in an attachment hole (203) in a shuttering wall (201), wherein the attachment pin (24) projects from a centre part (22) of the lid situated in the middle of the installation opening, **characterized in that** the pouring work box comprises a support (26) extending through the installation cavity for passing a pressure force exerted on the housing (2) through to the attachment pin, wherein the support (26) extends from the centre part and at least up to the bottom wall (4), wherein the support (26) is connected to the centre part (22) of the lid.

6. Pouring work box (1; 100) according to claim 5, wherein the attachment pin (24) is integrally formed with the lid (20; 120).

7. Pouring work box (1; 100) according to claim 5 or 6, wherein the installation edge (15) defines a straight mounting surface, wherein the attachment pin (24) is oriented transverse to the straight mounting surface.

8. Pouring work box (1; 100) according to any one of the claims 5-7, wherein the attachment pin extends along the centre line of the circumferential wall.

9. Pouring work box (1; 100) according to any one of claims 5-8, wherein the support stands detached on the bottom wall (4).

10. Pouring work box (1; 100) according to any one of claims 5-8, wherein the support (26) is connected to the bottom wall (4), wherein the connection with the bottom wall (4) preferably is detachable, preferably by means of a snap connection.

11. Pouring work box (1; 100) according to any one of claims 5-10, wherein the support (26) is integrally formed with the lid (20; 120).

12. Pouring work box (1) according to any one of the claims 5-11, wherein the installation edge (15) forms a part of an installation ring (14) attached at the inside of the circumferential wall (3), which ring (14) preferably can be rotated with respect to the circumferential wall (3), wherein the lid (20) preferably is attached on the installation ring (14).

13. Pouring work box (100) according to any one of the claims 5-11, wherein the installation edge (15) is a part of the lid (120), wherein the lid (120) is provided with a predetermined break connection (126) extending all round the centre part for separating the installation edge (15) from the centre part by means of breaking the predetermined break connection (126).

## Patentansprüche

1. Verfahren zum Aufnehmen eines Gießarbeitskastens (1; 100) in einer Wand (200) oder einem Boden zum Aufbauen einer elektrischen Verkabelung, wobei der Gießarbeitskasten umfasst ein Gehäuse (2) mit einer Bodenwand (4) und einer Umfangswand (3), die eine Installationskavität (5) abgrenzen, die über eine Installationsöffnung, die gegenüberliegend zur Bodenwand vorgesehen ist, für ein Anordnen von elektrischen Verbindungen zugänglich ist, eine Installationskante (15) an der Stelle der Installationsöffnung zur Befestigung von Schaltmaterial an dem Gießarbeitskasten, einen Deckel (20; 120), der die Installationsöffnung abschließt, und ein äußerer Befestigungsstift (24) zur Sicherung des Gießarbeitskastens in einer Befestigungsöffnung (203) in einer Schalungswand (201), wobei der Befestigungsstift mit dem Deckel verbunden ist, wobei der Befestigungsstift (24) von einem Mittelteil (22) des Deckels, das in der Mitte der Installationsöffnung vorgesehen ist, hervorsteht, wobei das Verfahren umfasst Bilden einer Befestigungsöffnung (203) über ein Bohren in einer Schalungswand (201) und Platzieren des Befestigungsstiftes (24) in der Befestigungsöffnung (203) über ein Ausüben einer Druckkraft (Q) auf das Gehäuse (2) in der Richtung der Schalungswand, wobei die Druckkraft im Inneren des Gehäuses (2) auf den Befestigungsstift (24) durchgelassen wird.

2. Verfahren gemäß Anspruch 1, bei dem die Druckkraft (Q) auf die Bodenwand (4) des Gehäuses (2) ausgeübt wird.

3. Verfahren gemäß Anspruch 1 oder 2, bei dem die Druckkraft (Q) mittels eines Schlagwerkzeugs, vorzugsweise eines Hammers (210), ausgeübt wird.

4. Verfahren gemäß einem der vorstehenden Ansprüche, bei dem die Druckkraft (Q) oder aufeinander folgende Druckkräfte auf das Gehäuse (2) ausgeübt werden, bis der Deckel (20) um den Befestigungsstift (24) sich gegen die Schalungswand (201) abstützt.

5. Gießarbeitskasten (1; 100) zum Aufbauen von elektrischer Verkabelung, umfassend ein Gehäuse (2) mit einer Bodenwand (4) und einer Umfangswand (3), die eine Installationskavität abgrenzen, die über eine Installationsöffnung, die gegenüberliegend zur Bodenwand vorgesehen ist, für ein Anordnen von elektrischen Verbindungen zugänglich ist, eine Installationskante (15) an der Stelle der Installationsöffnung zur Befestigung von Schaltmaterial an dem Gießarbeitskasten, ein Deckel (20; 120), der die Installationsöffnung abschließt, und ein äußerer Befestigungsstift (24) zur Sicherung des Gießarbeitskastens in einer Befestigungsöffnung (203) in einer Schalungswand (201), wobei der Befestigungsstift (24) von einem Mittelteil (22) des Deckels, das in der Mitte der Installationsöffnung vorgesehen ist, hervorsteht, **dadurch gekennzeichnet, dass** der Gießarbeitskasten eine Halterung (26) umfasst, die sich durch die Installationskavität hindurch erstreckt, für ein Durchlassen einer Druckkraft, die auf das Gehäuse (2) durch den Befestigungsstift ausgeübt wird, wobei sich die Halterung (26) von dem Mittelteil erstreckt und wenigstens bis zu der Bodenwand (4), wobei die Halterung (26) mit dem Mittelteil (22) des Deckels verbunden ist.

6. Gießarbeitskasten (1; 100) gemäß Anspruch 5, bei dem der Befestigungsstift (24) integral mit dem Deckel (20; 120) ausgebildet ist.

7. Gießarbeitskasten (1; 100) gemäß Anspruch 5 oder 6, bei dem die Installationskante (15) eine gerade Befestigungsfläche definiert, wobei der Befestigungsstift (24) transversal zu der geraden Befestigungsfläche ausgerichtet ist.

8. Gießarbeitskasten (1; 100) gemäß einem der Ansprüche 5 bis 7, wobei sich der Befestigungsstift entlang der Mittelachse der Umfangswand erstreckt.

9. Gießarbeitskasten (1; 100) gemäß einem der Ansprüche 5 bis 8, bei dem die Halterung freistehend auf der Bodenwand (4) steht.

10. Gießarbeitskasten (1; 100) gemäß einem der Ansprüche 5 bis 8, bei dem die Halterung (26) mit der Bodenwand (4) verbunden ist, wobei die Verbindung mit der Bodenwand (4) vorzugsweise lösbar vorgesehen ist, vorzugsweise mittels einer Schnappverbindung.

11. Gießarbeitskasten (1; 100) gemäß einem der Ansprüche 5 bis 10, bei dem die Halterung (26) integral mit dem Deckel (20; 120) ausgebildet ist.

12. Gießarbeitskasten (1) gemäß einem der Ansprüche 5 bis 11, bei dem die Installationskante (15) einen Teil eines Installationsrings (14) bildet, der an der Innenseite der Umfangswand (3) befestigt ist, wobei der Ring (14) vorzugsweise bezüglich der Umfangswand (3) gedreht werden kann, wobei der Deckel (20) vorzugsweise an dem Installationsring (14) befestigt ist.

13. Gießarbeitskasten (100) gemäß einem der Ansprüche 5 bis 11, bei dem die Installationskante (15) als ein Teil des Deckels (120) ausgebildet ist, wobei der Deckel (120) mit einer vorher festgelegten Bruchverbindung (126) vorgesehen ist, die sich um den gesamten Mittelteil erstreckt, zum Trennen der Installationskante (15) von dem Mittelteil über ein Brechen der vorher festgelegten Bruchverbindung (126).

## Revendications

1. Procédé pour loger une boîte d'ouvrage de coulée (1 ; 100) dans un mur (200) ou un sol pour établir un câblage électrique, dans lequel la boîte d'ouvrage de coulée comprend un boîtier (2) ayant une paroi inférieure (4) et une paroi circonférentielle (3) qui délimitent une cavité d'installation (5) qui, via une ouverture d'installation située à l'opposé de la paroi inférieure, est accessible pour agencer des connexions électriques, un bord d'installation (15) à l'emplacement de l'ouverture d'installation pour la fixation du matériel de commutation sur la boîte d'ouvrage de coulée, un couvercle (20 ; 120) fermant l'ouverture d'installation, et une broche de fixation externe (24) pour fixer la boîte d'ouvrage de coulée dans un trou de fixation (203) dans une paroi de coffrage (201), dans lequel la broche de fixation est raccordée au couvercle, dans lequel la broche de fixation (24) fait saillie d'une partie centrale (22) du couvercle située au milieu de l'ouverture d'installation, dans lequel le procédé comprend les étapes consistant à former un trou de fixation (203) en perçant dans une paroi de coffrage (201) et placer la broche de fixation (24) dans le trou de fixation (203) en exerçant une force de pression (Q) sur le boîtier (2) dans la direction de la paroi de coffrage, laquelle force de pression à l'intérieur du boîtier (2) passe à travers la broche de fixation (24).

2. Procédé selon la revendication 1, dans lequel la force de pression (Q) est exercée sur la paroi inférieure (4) du boîtier (2).

3. Procédé selon la revendication 1 ou 2, dans lequel la force de pression (Q) est exercée au moyen d'un outil à percussion, de préférence un marteau (210) .

4. Procédé selon l'une quelconque des revendications précédentes, dans lequel la force de pression (Q) ou les forces de pression successives sont exercées sur le boîtier (2) jusqu'à ce que le couvercle (20) autour de la broche de fixation (24) vienne en butée contre la paroi de coffrage (201).

5. Boîte d'ouvrage de coulée (1 ; 100) pour établir un câblage électrique, comprenant un boîtier (2) ayant une paroi inférieure (4) et une paroi circonférentielle (3) qui délimitent une cavité d'installation qui, via une ouverture d'installation située à l'opposé de la paroi inférieure, est accessible pour agencer des connexions électriques, un bord d'installation (15) à l'emplacement de l'ouverture d'installation pour la fixation du matériel de commutation sur la boîte d'ouvrage de coulée, un couvercle (20 ; 120) fermant l'ouverture d'installation, et une broche de fixation externe (24) pour fixer la boîte d'ouvrage de coulée dans un trou de fixation (203) dans une paroi de coffrage (201), dans laquelle la broche de fixation (24) fait saillie d'une partie centrale (22) du couvercle située au milieu de l'ouverture d'installation, **caractérisée en ce que** la boîte d'ouvrage de coulée comprend un support (26) s'étendant à travers la cavité d'installation pour faire passer une force de pression exercée sur le boîtier (2) par la broche de fixation, dans laquelle le support (26) s'étend à partir de la partie centrale et au moins jusqu'à la paroi inférieure (4), dans laquelle le support (26) est raccordé à la partie centrale (22) du couvercle.

6. Boîte d'ouvrage de coulée (1 ; 100) selon la revendication 5, dans laquelle la broche de fixation (24) est formée de manière solidaire avec le couvercle (20 ; 120).

7. Boîte d'ouvrage de coulée (1 ; 100) selon revendication 5 ou 6, dans laquelle le bord d'installation (15) définit une surface de montage droite, dans laquelle la broche de fixation (24) est orientée de manière transversale par rapport à la surface de montage droite.

8. Boîte d'ouvrage de coulée (1 ; 100) selon l'une quelconque des revendications 5 à 7, dans laquelle la broche de fixation s'étend le long de la ligne centrale de la paroi circonférentielle.

9. Boîte d'ouvrage de coulée (1 ; 100) selon l'une quelconque des revendications 5 à 8, dans laquelle le support reste détaché sur la paroi inférieure (4).

10. Boîte d'ouvrage de coulée (1 ; 100) selon l'une quelconque des revendications 5 à 8, dans laquelle le support (26) est raccordé à la paroi inférieure (4), dans laquelle le raccordement avec la paroi inférieure (4) est de préférence détachable, de préférence au moyen d'un raccordement à encliquetage.

11. Boîte d'ouvrage de coulée (1 ; 100) selon l'une quelconque des revendications 5 à 10, dans laquelle le support (26) est formé de manière solidaire avec le couvercle (20 ; 120).

12. Boîte d'ouvrage de coulée (1) selon l'une quelconque des revendications 5 à 11, dans laquelle le bord d'installation (15) forme une partie d'une bague d'installation (14) fixée à l'intérieur de la paroi circonférentielle (3), laquelle bague (14) peut de préférence être entraînée en rotation par rapport à la paroi circonférentielle (3), dans laquelle le couvercle (20) est de préférence fixé sur la bague de fixation (14) .

13. Boîte d'ouvrage de coulée (100) selon l'une quelconque des revendications 5 à 11, dans laquelle le bord d'installation (15) fait partie du couvercle (120), dans laquelle le couvercle (120) est prévu avec un raccordement de rupture (126) prédéterminé s'étendant tout autour de la partie centrale pour séparer le bord d'installation (15) de la partie centrale au moyen de la rupture du raccordement de rupture (126) prédéterminé.
